# EUROPEAN PATENT SPECIFICATION

(11) **EP 3 740 329 B1**
(45) Date of publication and mention of the grant of the patent: **16.04.2025**
(21) Application number: 19703190.9
(22) Date of filing: 14.01.2019
(51) Int. Cl.: B08B 9/055, C09K 8/594, E21B 43/12, F16L 55/42

(54) **METHOD FOR THE REMOVAL OF DEPOSITS ACCUMULATED IN THE PIPELINES OF TRANSPORT OF GAS**
VERFAHREN ZUM ENTFERNEN VON IN DEN ROHRLEITUNGEN ZUM TRANSPORT VON GAS ANGESAMMELTEN ABLAGERUNGEN
PROCÉDÉ POUR L'ÉLIMINATION DE DÉPÔTS ACCUMULÉS DANS LES PIPELINES DE TRANSPORT DE GAZ

(30) Priority: 19.01.2018 IT 201800001388
(43) Date of publication of application: 25.11.2020
(73) Proprietor: Chimec S.p.A., 00144 Roma (IT)
(72) Inventor: BUCCOLINI, Marco, 62032 Camerino (MC) (IT); QUARANTA, Andrea, 04011 Aprilia (LT) (IT); ALLEGRUCCI, Alessandro, 00139 Roma (IT)
(74) Representative: Montemurro, Riccardo
(86) International application number: PCT/IB2019/050259
(87) International publication number: WO 2019/142083

(56) References cited:
- WO-A1-2008/094241
- WO-A2-2008/109216
- WO-A2-2011/064292
- US-A- 5 127 961
- US-B1- 6 802 909

## Description

### Technical field of the invention

The present invention relates to a new use of foaming products already known for the removal of the liquid column which lowers or cancels the production of gas wells (*Gas Well Deliquification).* In the particular use of these foaming products, according to the invention, a foam cushion is formed, through the forced interaction of gas, water and product, capable of moving huge amounts of water and hydrocarbons accumulated in the pipelines for the production and/or transportation of gas. The removal of the deposits takes place in very quick time and allows an important decrease in the pressure drops and an effective cleaning of the line, with consequent quick increase in the produced and/or transported gas quantities.

### State of prior art

The production of the gas wells usually is limited by the accumulation of water and light hydrocarbons (usually called "condensates") produced together with the gas, phenomenon which extends with ageing of the well itself. In the "mature" wells, the decrease in pressure of forming gas and speed of the gas itself, causes the invasion of the well bottom due to the deposition of liquids called "loading". The *liquid loading* of a gas-well takes place when the well bottom pressure is not sufficient to displace the produced liquids (condensate and above all water, which often is very saline and then at high density). The liquids, by accumulating, obstruct the gas passage from the productive formation to the well by determining a progressive decrease in the production and a reduction in the duration of the well itself. There are several methods to perform the well unloading (*unloading*), some thereof are called: *Gas Lift, ESP, Beam pumps, Plunger Lift,* P*CP.* The selection depends upon technical reasons (operability) and economic reasons. The chemical method for removing by foam (*Foam Assisted Lift* (*FAL*)) provides the use of foaming agents capable of creating a foam which lightens the weight of the hydrostatic column thus by allowing the pressure of the deposit reserve to continue to supply gas from the well. See for example WO2008/109216 or WO 2011/064292. FAL is integral part of the programmes for managing the operation of low production wells, even if it is very difficult in case of high condensate: water ratios. In fact, the traditional foamers (*foamers*) can be ineffective if the condensate concentration is high. The foam has the effect of reducing the required critical speed so that the gas transports the liquid as far as the well head. The decrease in surface tension and density of liquid head performed with the *foaming* determine a decrease in about 2/3 of the critical speed. The typical dosages are between 4,000 and 10,000 ppm referred to the volume of total produced liquid. The foam can be formed through the interaction of the chemical product *(foamer)* with a gas, which usually is the hydrocarbon gas produced by the well itself; however, when the well gas production is already very reduced and it would not be sufficient to form the required amount of foam, other gases can be added. The usable gases are nitrogen, carbon dioxide, methane, natural gas or other hydrocarbon gases.

The document WO2008/094241 A1 discloses a method for the removal of deposits accumulated in a pipeline comprising the steps of blocking the flow of gas along the pipeline by a shut-off valve, providing a foam pig, wherein a reactivated flow of gas pushes the foam pig along the pipeline carrying the deposits.

There are mainly three main methods for applying the *foamer* in the well:
- launch of soap sticks (*soap sticks*) in the *tubing:* it is cheap, it is easy to be applied and it does not require additional equipment. However, the success rate is low, since there are difficulties in dissolving quickly soap sticks in the well.
- batch treatment in the annulus, that is the space comprised between the production tube and the well wall. They can be performed in wells without packer (that is packing device, that is device for closing a hydraulically sealed oil well) wherein the treatment fluid can be pumped by the annulus.
- downhole (that is in the well bottom) injection continuously or in batches. A technique which allows to perform an injection of foaming agent at any well depth through a *"capillary string"* constituted by a tube having a small diameter inserted inside the well production tube. Such system can be used even in well equipped with safety valve in well (SCSSV).

The three methods are based upon the use of similar chemistries, but solve different well situations. Although they are all usually applied, the third method is considered the best one since it allows a direct and controlled injection directly in the well bottom.

About the use of foams see the following literature:
J. F. Lea, H. V. Nickens, M. R. Wells "Gas Well Deliquification" Second Edition, Gulf Drilling Guides, Gulf Professional Publishing, Elsevier*.*
Kalman Koczo, Oleg Tselnik and Benjamin Falk, Momentive Performance Materials Inc. "Silicon-Based Foamants For Foam Assisted Lift of Aqueous-Hydrocarbon Mixture ", SPE 141471, 2011*.*
B.P. Price and B. Gothard, SPE & Multi-Chem "Foam-Assisted Lift: Importance of Selection and Application", SPE 106465, 2007*.*
D. Orta, S. Ramanchandran, J. Yang, M. Fosdick, T. Salma, J. Long, J. Blanchard, Baker Petrolite Corp. and A. Allcom, C. Atkins and O. Salinas, Shell E&P "A Novel Foamer for Deliquification of Condensate-loaded Wells", SPE 107980, 2007*.*
M. Pakulski "Testing Gas Well Deliquification Chemicals at Real Downhole Conditions", SPE 121564, 2008*.*
C.A.M. Veeken and S.P.C. Belfroid "New Perspective on Gas-Well Liquid and Unloading", SPE 134483, 2010*.*
S. Campbell, S. Ramachandran and K. Bartrip, Baker Petrolite "Corrosion Inhibitor/Foamer Combination Treatment to Enhance Gas Production", SPE 67325, 2001*.*
S. Saleh and M. Al-Jamae 'y, Colorado Scholl of Mine "Foam-Assisted Liquid Lifting in Low Pressure Gas Wells", SPE 37425, 1987*.*

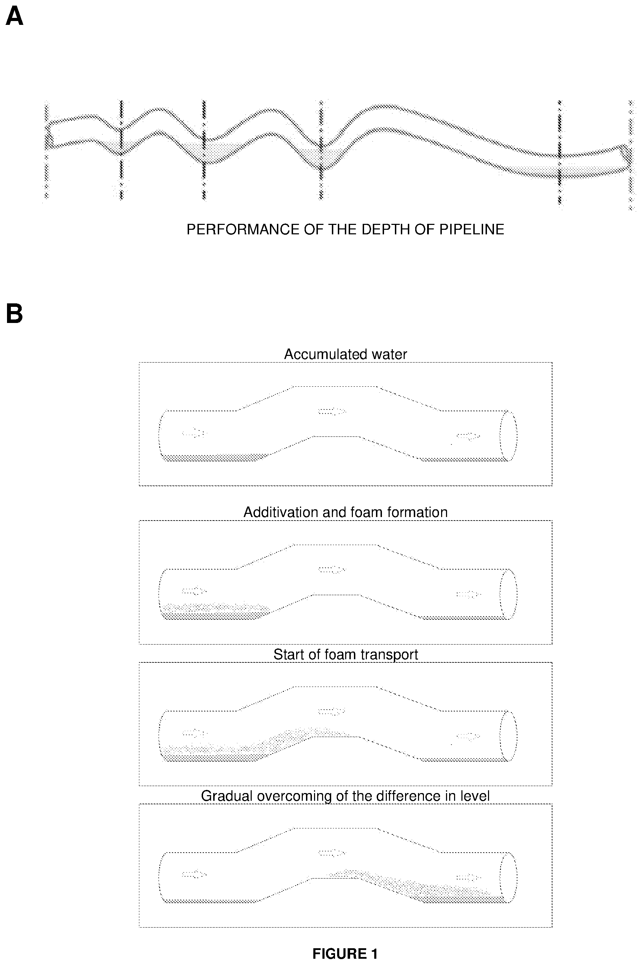

The techniques described sofar can be used to free the lines which transport gas from accumulation of the associated liquids; in the same way as it happens in the well, the accumulation of water and condensate can increase considerably the pressure drops produced by the gas transportation in pipeline. One line can easily be filled up with liquids, if the segment which has to travel is uphill or at topographical valleys (Figure 1 A); the pressure drops (*pressure drops*) coming from this situation contrast with the production pressure at the well head. If a well is mature by now, the production pressure will be low and the pressure drop due to liquids in the line can cause a considerable production loss or, in the worst case, a well stop.

The production liquids then can accumulate both at the well bottom (rising of the hydrostatic head) and in gas transportation lines, in absence of separators placed at the well head or, even if the latter are present, should they result to be however inadequate to the total removal of the liquids associated to the gas production.

Such phenomena of *"liquid loading"* can be eliminated partly or totally by several techniques, thereamong the use of foaming agents.

The traditional use of foamers *(foamers)* provides the addition in batches or continuously of the product, which has to be capable of developing the foam after the flow of production gas and the turbulence caused thereby.

The formed foam lowers the surface tension of the water existing in the pipeline which is then transported, still by the same gas, more easily than the water itself. At the end of the stroke, the foam reaches the production field and the main separators where it has to be removed, before entering the separator, with a suitable defoaming additive, with the purpose of avoiding dragging of liquid in the produced gases.

The addition of a large amount of product causes the formation of foam in the first valley full of water (Figure 1B (1)). The foam moves relatively easily, dragged by the gas and reaches the second valley (Figure 1B(2)); here, the foamer concentration at first is not sufficient to cause foam, therefore the foam formation will be obtained after a large series of additivations.

When the *foamer* has reached the critical concentration, it will form foam which will be dragged as far as the subsequent valley and as far as the final triphasic separator.

Such treatment requires long periods of time and large amounts of foamer have to be injected into the system.

Another known, this time mechanical, method to free the gas transportation lines from the hydrodynamical loads is the use of "pig".

*The pigs* are mainly cleaning brushes. The materials thereof they are made can be plastics such as polyurethane foam or silicone rubber, or metals such as stainless steel. It seems that the first devices were made of steel and leather and when they slid they emitted strident and scratchy noises, as if inside the pipe there could be animals screeching, consequently the name "pig".

Practically, the *pig* is a device which is inserted in a pipeline and it moves along the whole length of the line, thanks to the push given by the production gas or by other propellants (air, water, nitrogen, ...) by cleaning and emptying the pipeline itself. When the amount of accumulations of gas pollutants (sand, water, precipitated salts, liquid and solid hydrocarbons such as paraffin, etc.) on the inner walls of the pipelines starts to create occlusions, this cleaning device is launched. Nowadays, the use *of pigs* is very widespread and in continuous evolution, by guaranteeing the increase in the productive flows, decrease in the pumping pressures and cleaner and safer productions.

Obviously not all pipes can be treated with a *pig,* but in most cases, upon construction, the line is implemented so that *a pig* could be launched for cleaning and water removal operations.

The essential condition for using pigs then is the presence of a launch station, wherein the *pig* is inserted, and an arrival station (which in case of loop can coincide with the launch one) wherein the *pig* will wait for being re-used. Obviously, it is strongly unadvisable to leave the *pig* captured in the line without having possibility to extract it. Moreover, the valves existing in the "piggable" lines have to allow the *pig* passage without creating inhomogeneities with the remaining portion of the line or representing an obstacle or a shrinkage which can be hardly overcome by the pad.

The *pig* technology is very effective and little risky if it is applied on a new line and it is fitted to the correct use of the technology itself: however, some outdated lines, worn by time, even if at the beginning are "piggable", they have no more safety and sliding conditions required to apply this technique. Should the occlusions in some tracts be too consolidated, or should the line geometry have changed due to a series of mechanical operations over the system life, this mechanical treatment becomes risky and it cannot be used.

Moreover, even if it is effective, the classical *pig* technology however is extremely invasive as far as application time and modes are concerned: the pipeline has to be closed and thus the production has to be stopped for a relatively long period of time. The lines, before being treated, have to be always drained with nitrogen to avoid possible risks of explosion, then the launch of *pig* requires quite long stopping periods of time, which could be estimated always in the order of some hours or even days (8 hours on the average). The object of the present invention is to provide a new technology which overcomes the disadvantages of the known techniques and which is overall advantageous with respect thereto.

### Summary of the invention

The present invention, which is defined by the appended claims, practically joins the technology of the foamers (*foamer*) with that of the launch of the *pig,* in which the new idea is represented by the formation of a *pig* formed by a foam cushion, arranged inside the pipeline and produced by using water, surfactant and the same production gas. Under pig foam a piston or pad of dense, compact and sufficiently consistent foam is meant.

The foam which has formed in fact can have the consistency and the resistance of a real *pig* and it is capable of moving small accumulations of sediments, but, above all, all liquids accumulated and included in the pipeline by acting as a piston. Then, its cleaning and removing effect is obtained by means of a mechanical push rather than through the mechanisms underlying the techniques with foamers described in the prior art, that is decrease in the surface tension of accumulated water and integration of the same water in the foam then dragged towards the end of the pipeline.

Therefore, the present invention is defined in claim 1 and relates to:
a method for the removal of deposits accumulated in the pipelines for the production and/or transportation of gas characterized by the following steps:
a) the flow of gas along the pipeline is locked through a (locking) shut-off valve;
b) a compact foam cushion is provided which completely fills-up a section of the pipeline downstream of the shut-off valve and upstream of the section containing the deposits;
   the flow of gas that pushes the foam cushion along the pipeline carrying the deposits with it is re-activated, wherein the foam is produced by mixing one or more surfactants and gas or air in a solvent selected from water, aqueous solution or organic solution.

In an embodiment of the method of the invention the foam cushion is produced *in situ* in the pipeline or is produced externally to the pipeline and subsequently introduced in the pipeline.

In another embodiment the foam cushion is produced by mixing in a solvent selected from water, aqueous solution or organic solution one or more surfactants and gas or air.

In another embodiment the surfactant is selected from: oxyethylated surfactants, oxyethylated phenols, oxyethylated fatty acids, oxyethylated alkyl monoethanolamides, lauryl beta imino-propionates, oxy-ethylene oxy-propylene copolymers, anionic surfactants, acid surfactants, basic or amphoteric surfactants or solid soaps.

In a specific embodiment the foam cushion is produced *in situ* in the pipeline and the method comprises the following steps:
- a section of pipeline is isolated through an initial valve and a final valve that delimits the downstream segment;
- it is vented in the segregated (isolated) section by reducing its pressure about to atmospheric pressure;
- the segregated line section is filled-up with a mixture of water and foamer;
- the initial valve is opened, upstream of the segregated section;
- the final valve is opened, downstream of the segregated segment by creating a strong turbulence downstream of the valve that intimately mixes the thrust gas with the water and the surfactant in solution;
- the gas pressure is allowed to push the foam cushion along the pipeline and the foam cushion pushes water and any debris accumulated up to a collection station.

In another specific embodiment the foam cushion is produced externally to the pipeline and the method comprises the following steps:
- the pipeline is closed by means of a shut-off valve upstream of the section including accumulations;
- the foam cushion is produced externally to the pipeline through suitable means;
- the foam cushion is inserted inside the pipeline, downstream of the shut-off valve, through a side-load line;
- the shut-off valve is completely re-opened.
- the gas pressure is allowed to push the foam cushion along the pipeline and the foam cushion pushes the liquids and any debris accumulated up to a collection station.

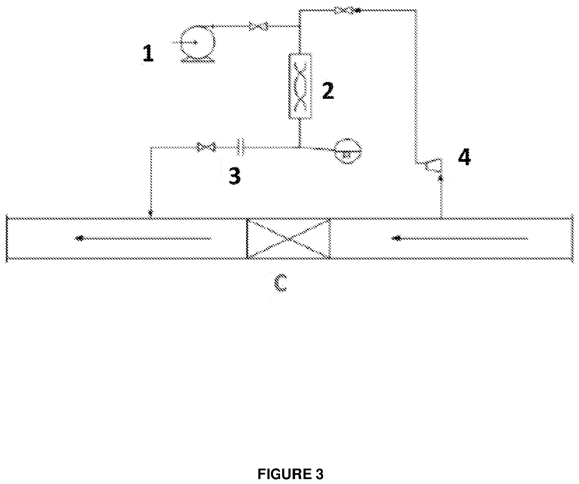

In another embodiment the suitable means to produce the foam cushion is selected from: a mixer, a pump for the water/product mixture, having high flow rate and high operating pressures, an orifice or nozzle, a pressure reducer (figure 3).

Secondly, the invention relates to a foaming agent comprising, or consisting of, a surfactant selected from oxyethylated surfactants, oxyethylated phenols, oxyethylated fatty acids, oxyethylated alkyl monoethanolamides, lauryl beta imino-propionates, oxy-ethylene oxy-propylene copolymers, anionic surfactants, acid surfactants, basic or amphoteric surfactants or solid soaps in a method according to anyone of claims 1 to 3 and 7 to 10, for the preparation of a foam cushion.

Thirdly, the invention relates to the use of a foaming agent comprising, or consisting of, a surfactant selected from oxyethylated surfactants, oxyethylated phenols, oxyethylated fatty acids, oxyethylated alkyl monoethanolamides, lauryl beta imino-propionates, oxy-ethylene oxy-propylene copolymers, anionic surfactants, acid surfactants, basic or amphoteric surfactants or solid soaps in a method according to anyone of claims 1 to 3 and 7 to 10, for the preparation of a foam cushion.

Herein described is also an industrial plant for the gas production and/or transportation, comprising a pipeline for the gas transportation, equipped with means for generating a foam cushion inside the pipeline itself and suitable for the removal of deposits which impede the gas flow through the pipeline.

In a specific embodiment of the plant according to the invention, the means for the production of the foam cushion is represented by at least one segment of the pipeline itself (segregable) isolable from the rest of the pipeline by a first upstream valve and a second downstream valve and provided with at least one external valve for opening to the atmosphere for venting the internal gases and for loading a foaming agent and at least one valve cut-off, that is a side tube having small section, for the insertion of an instrument (thermometer, pressure gauge, ...) or for gas sampling, said isolable segment being upstream of the pipeline area obstructed by deposits.

The plant can be a refinery, comprising means for the production of the foam cushion described in the present invention for the drainage of the lines transporting gas inside said plant between an operating phase and the subsequent one.

At last, the present invention relates to the use of a foam cushion as described and defined in the present description and claims, for handling unwished gases which can accumulate in the tubes of industrial plants and/or for the drainage of said pipelines.

The means for generating a foam cushion can be foam production means external and in parallel with respect to the pipeline itself comprising an instrument suitable for the foam production and a pipeline for introducing the foam in the main line.

The unwished gases, or however the gases to be removed by means of the foam cushion according to the present invention, can be natural gases, a not limiting example thereof is represented by methane and/or propane, or they can be gases which develop in the plant after refining processes (herein defined even as "process gases") a not limiting example thereof is represented by propane, butane, hydrogen sulphide, mercaptans and other gases known to the person skilled in the art.

### Advantages

The foam forming procedures are very simple: mainly a line section, which can be segregated from the remaining portion of the system, or an external foam production plant or apparatus can be used.

Both modes were tested effectively, by providing optimum results and then they are an essential portion of this invention. The whole procedure can be concluded in very short time (fractions of one hour or little more) and the production standstill is very limited in time, much shorter than the traditional applications of the mechanical *pigs.*

The use of this new technique then allows to move huge quantities of water in very short periods of time. In the classical application it is necessary to wait for the foaming product being transported by the gas, reaching the first bag of water accumulated in the line, concentrating until reaching the critical concentration of foam formation, developing then the foam and therethrough transporting progressively the water (only the water contributing to the foam formation is transported): same mechanism for the subsequent bags, in which the foam transported by the gas arrives, will dissolve partially and contribute to raise the surfactant concentration, until reaching again the critical one and to re-form foam, and so on.

This mechanism involves then long periods of time and the water arrives in the final station very diluted over time, in a period which can reach several days.

By using the invention technique of the *foam* cushions, the water arrives very quickly, pushed by a compact foam pig: clearly the attention in the gas receiving station should be higher.

In fact, the arrival of huge quantities of water could create problems for the triphasic separators downstream of the pipeline.

Obviously, the use of a suitable defoaming product is required, to avoid that the formed foam reaches the separator and produces phenomena of dragging liquid in the gas and consequently in the downstream compressors.

In conclusion the use of the "foam cushion" results to have several advantages with respect to the classical techniques. With respect to the continuous additivation of the foamer it has a much shorter duration in time, it reduces drastically the quantity of required surfactant and it is much more effective. With respect to the use of the mechanical pig, it results to be less invasive, it can be performed on all ducts, even on the mechanically not piggable ones, in much shorter periods of time, by allowing a much more reduced production standstill, and it cancels any risk of mechanical damages caused by dragging of classical pig during the travel in pipeline. The advantages in terms of time and cost are very considerable, since it can be applied in few hours and by involving very few personnel.

An additional advantage of the present invention is given by the use of the new technique of foam cushion provided in the present description even in the lines which transport gases inside a refinery. In particular the application of this technique is useful for draining the blow down (blow down) circuit and torch. This portion of the refinery plants is necessary as the pressure recipients of the refinery itself are constructed in order to withstand a prefixed inner pressure. Should the inner pressure overcome the pre-established value, the exceeding gas is evacuated through suitably calibrated safety valves; the discharge in atmosphere is not advisable since the vapours and gases can be toxic and impact with surrounding environment, then the discharge in torch allows to reduce quickly and safely the pressure of the plants in case of emergency. The torch (or flame) burns the possible gas excess produced by the plants with respect to the requirements of furnaces, as well as the gas surplus produced during the not regular running of the plant (start, stop, malfunctions).

During running of a refinery, the discharge circuit and torch, including a series of very long lines, having great sizes, carrying indeed gases to the flame, is polluted by a series of by-products transported by the discharge gases, such as sulphurs, H₂S, mercaptans, light hydrocarbon compounds and carbon residues.

For this reason, when one passes from an operating phase to a subsequent one of the discharge plant (for example start or stop due to maintenance) the drainage of the plant itself is required: drainage is useful to make the inner environment of the apparatuses compatible with the subsequent procedures. Therefore, it is necessary to proceed with draining the plant before starting it, after a maintenance or before stopping due to maintenance. For example before starting, the plant is drained to remove all air, before introducing hydrocarbons, for safety reasons and to avoid explosive atmospheres. Before maintenance it is suitable to proceed with a drainage to remove all gaseous hydrocarbons, hydrogen and any other combustible gas or vapour, before introducing air in the plant. The real absence of residues of gases or vapours has to be demonstrated by analysis on site or in laboratory.

The fluids usually used for drainages are nitrogen and water vapour.

The invention illustrated in this patent is new and particularly useful in case of drainage of the refinery discharge lines: the removal of the gases from the line often is low and little effective if performed with nitrogen or vapour, it involves the use of huge amounts of these fluids for very long periods of time (several days). The use of a foam pig (foam cushion formed with water, surfactant and gas which in this case will be nitrogen), allows the real removal of various gases and pollutants inside the lines, quickly and with maximum effectiveness.

The preferably used gas for forming foam is nitrogen: the formed foam cushion could be pushed always by nitrogen as carrier or by high or medium pressure vapour. The surfactants used to form the foam will help even in cleaning the line, by favouring the removal of the liquid and solid pollutants. Moreover, the foam can be used as transportation carrier for other substances compatible with the foam itself and useful in cleaning and decontamination, as solvents and oxidants (amines-oxide, various peroxides in particular persulphate and percarbonate). The implementation of this new technology is particularly simple, it suffices a cut-off for the nitrogen and a recipient for collecting the foam at the end of the line. No constraint of increase in temperature differently from stripping with vapour and moreover much less condensate to be managed. Other advantages are little weight in tubes since almost no liquid phase and high time saving with respect to stripping with vapour.

Additional advantages and features according to the present invention will result evident to the person skilled in the art by the following detailed description of the invention itself.

### Brief description of the figures

Figure 1: In the first panel (A) a pipeline with water deposited in the valleys is illustrated. The other panels (B) show the classical operation of the foaming products; the additivation of a large amount of product causes the formation of foam in the first valley full of water. The foam moves relatively easily, dragged by the gas and reaches the second valley; here the foamer concentration at first is not sufficient to cause foam, then the foam formation will be obtained after a considerable series of additivations. When the *foamer* has reached the critic concentration, it will form foam which will be dragged as far as the subsequent valley and as far as the final triphasic separator.

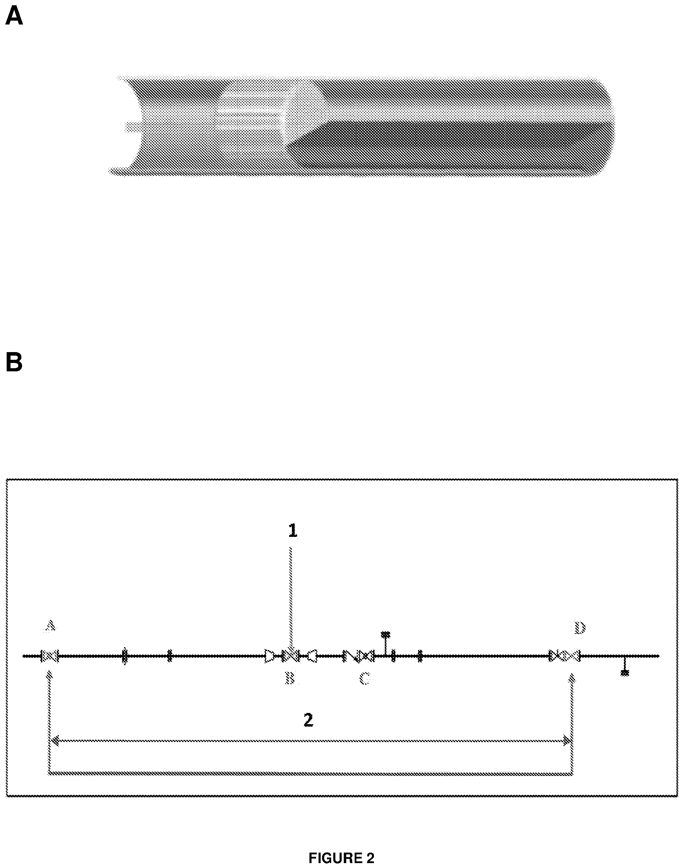

Figure 2: Panel A illustrates schematically the mechanical action for removing liquids exerted by the foam pig (foam pig) according to the invention. Panel B represents one of the embodiments of the invention with foam production in situ. In particular a line segment is represented arranged for loading the foaming product in batch. (1) point for injecting the water/foamer mixture and/or the foam; (2) line section filled up with foam; (A) shut-off valve that delimits the downstream segment; (B) valve cut-off for venting the line and/or for introducing the foam; (C) line venting; (D) shut-off valve of the gas line or initial valve, upstream of the segregated section
Figure 3: the figure illustrates schematically a plant with external means for producing foam and for connecting the foam forming means to the line: (1) injection pump foamer/water; (2) static mixer; (3) aperture; (4) pressure reducer; (C) shut-off valve of the gas line.

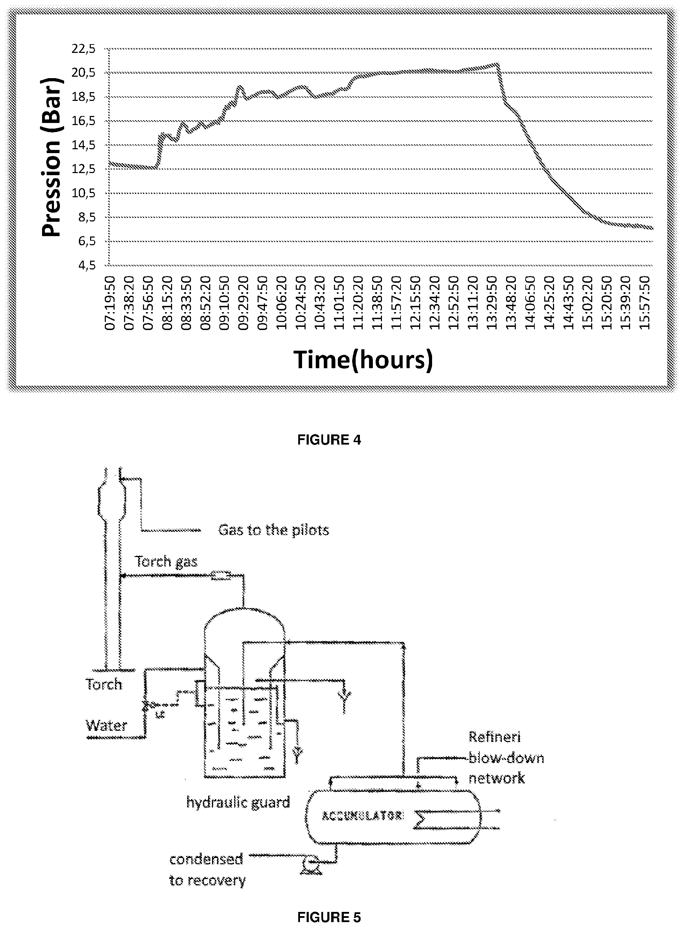

Figure 4: The figure shows a graph of the pressure variation inside the pipeline during the process for removing the liquids. Figure 5: The Figure represents a scheme comprising a refinery discharge network, in the present invention the means for producing the foam cushion would form such foam cushion for *in situ* introduction or formation before or in the initial portion of the Blow-Down network of the refinery shown in figure.

### Detailed description

To the purpose of the present invention the following technical terms should be interpreted as explained hereinafter:
Under *"line"* the pipe or pipeline is meant carrying the gas from a first position to a second subsequent position. For example, from the extracting well head to a subsequent processing station.
Under *"well head"* the well surface portion is meant which puts into communication the deposit with the transportation lines.
Under *"well head valves"* the set of valves is meant required to adjust the flows from the well to the transportation lines.
Under "*shut-off valve"* a valve is meant inserted in the pipeline capable of locking the flow inside the line.
Under "*shut-off*" along the pipeline a side pipe having small section is meant for the insertion of an instrument (thermometer, pressure gauge, ...)
Under *pig* a cleaning brush is meant.
Under "*foam pig"* or "*foaming pig"* a pad or a piston of sufficiently dense and compact foam is meant which pushed by the pressure of gas outgoing from the well pushes or drags in its stroke along the pipeline the deposits to be removed.
Under "*foaming agent"* or simply "*foamer*" an agent is meant including or consisting of a surface-active agent or surfactant or mixtures thereof. The composition of foaming agent usually comprises the surface-active agent or the mixture of surface-active agents, water and other elements thereamong: solvents and co-solvents required to the stability of the formulated product, acids or bases or Salts to modify the pH of the mixture or to improve the surface-active agents' performances. To the purpose of the present invention the words "surface active agent" and "surfactant" are to be considered synonyms.

The expressions *"upstream"* and *"downstream"* are to be referred to the direction of the gas stream flowing from the well outlet or head towards a peripheral station. The two expressions identify a position preceding or following another position on the line, respectively.

### The Foamers

A very wide series of surface-active substances can be used as foamers (*foamers*) according to the present invention. Said surfactants are already known in the petrochemical field. A foaming agent according to the invention can include or consist of one surfactant only or a mixture of different surfactants.

In 1959, Dunning and others tested a series of commercial surfactants such as: oxyethylated surfactants, oxyethylated phenols, oxyethylated fatty acids, oxyethylated alkyl monoethanolamides, lauryl beta imino-propionates, oxy-ethylene oxy-propylene copolymers, anionic surfactants, acid surfactants, basic or amphoteric surfactants.

Examples of suitable acid surfactants are: coco-carboxypropionic acid, acrylic acid/dimethyl-diallyl ammonium chloride copolymer, coconut trimethyl ammonium chloride, C9-11 alkyl (linear)-alcohol alkoxy sulphate, C6-10 alkyl (linear)-alcohol alkoxy sulphate, triethyleneglycol-monohexyl-ether sulfate, C14-16 alpha olefin sulfonate, ethylenediamine tetra acetic acid trisodium salt, oleic acid, dodecanoic acid, coconut acid, octadecanoic acid, lauryl acid, myristic acid, hexadecanoic acid, octanoic acid.

Examples of suitable basic surfactants are: coco-dimethylamine-oxide, cocot-amidopropyl sulfo betaine, coconut-amidopropyl betaine, coconut-amidopropyl amine oxide, tall oil bis-hydroxyethyl glycinate, coco-diethanolamide, oleic acid diethanolamide, coco-N,N-bis-hydroxyethyl amide, oxyethylated coco-amine, laurylamine oxide, dihydroxy ethyl C12-15 alkoxypropyl amine oxide.

The amphoteric surfactants suitable to the invention can be: coco-ampho-acetate, coco-ampho-propionate, coco-ampho-hydroxypropyl sulfonate, lauryl-ampho-acetate, lauryl-ampho-dipropionate, capryl-ampho-diacetate, sodium lauryl-imino propionate, disodium talloil iminodipropionate, stearyl ampho-propyl sulphonate.

The interfix "ampho" means amphoteric that is a substance which can behave with acid or basic characteristics depending upon the substance therewith it can interact and it designates the presence of an additional ammonium or nitrogen group in the corresponding molecule or formula of the shown surfactant. For example ammonium, imino, imidazole or equivalents, conferring the amphotericity feature.

In particular they can be used even with solid soaps in form of stick. In this association they were used for the *Foam Assisted Lift.*

Possible variants and/or additions can be introduced by the persons skilled in the art to the herein described and illustrated embodiment of the invention within the scope of the following claims.

Thereamong the following surfactants resulted to be particularly effective and then they represent the preferred ones: coco-carboxypropionic acid, acrylic acid/dimethyl-diallyl ammonium chloride copolymer, coconut trimethyl ammonium chloride, C9-11 alkyl (linear)-alcohol alkoxy sulphate, C6-10 alkyl (linear)-alcohol alkoxy sulphate, triethyleneglycol-monohexyl-ether sulfate, C14-16 alpha olefin sulfonate, ethylenediamine tetra acetic acid trisodium salt, oleic acid, dodecanoic acid, coconut acid, octadecanoic acid, lauryl acid, myristic acid, hexadecanoic acid, octanoic acid, coco-dimethylamine-oxide, cocot-amidopropyl sulfo betaine, coconut-amidopropyl betaine, coconut-amidopropyl amine oxide, tall oil bis-hydroxyethyl glycinate, coco-diethanolamide, oleic acid diethanolamide, coco-N,N-bis-hydroxyethyl amide, oxyethylated coco-amine, laurylamine oxide, dihydroxy ethyl C12-15 alkoxypropyl amine oxide, coco-ampho-acetate, coco-ampho-propionate, coco-ampho-hydroxypropyl sulfonate, lauryl-ampho-acetate, lauryl-ampho-dipropionate, capryl-ampho-diacetate, sodium lauryl-imino propionate, disodium talloil iminodipropionate, stearyl ampho-propyl sulphonate.

### The foam cushion

The production of high-density foam having consistency suitable for preparing a foam cushion is performed under the following conditions: water/foamer ratio from 1:3 to 1:1; foam density ranging from 0.1 g/ml and 0.5 g/ml.

The foam quantity required for each foam cushion launch depends upon the diameter of the pipeline and provides the use of few tens of litres (10, 20, 30) of water/foamer mixture to some hundreds of litres with the purpose of producing some cubic meters of foam (for example 1 to 20).

### In-situ preparation of the foam

The method of the invention provides two possible implementation modes. The first one wherein the foam is produced *in situ* in a line segment with respect to the whole pipeline (Figure 2, panel B), the second one wherein the foam is produced externally in a plant parallelly with respect to the line (Figure 3, panels A and B).

In the first mode, it results essential that the pipeline line has at least a section of some tens of meters, for example 10, 15, 20, 30 meters, which could be isolated from the remaining portion, positioned in the initial portion, that is little next the well head or however upstream with respect to the areas which have to be cleaned, that is the areas which can accumulate liquids or obstruct with debris. The isolated segment then has to be equipped with one or more valves for closing the well head, which delimit it upstream and which determine the beginning of the segment and it must have a closing valve which delimits it downstream of the initial one, as said at the distance of 10-30 meters (also depending upon the line diameter). Clearly the isolated segment has to be provided with at least one external valve for opening to the atmosphere required for venting the gas remained trapped with consequent drainage of the segment itself. The segment will equally include at least one valve cut-off for the insertion of an instrument (thermometer, pressure gauge, etc) or for gas sampling and for inserting the foaming agent or the foam preformed according to the embodiment of the invention.

The plant can provide two or more segments which can be isolated in series, as above described, for the sequential production of two or more foam cushions which will reach the line end separator independently.

This type of plant provides the *in-situ* production of foams. The procedure for creating the foam can be schematized in few essential steps described by way of example:
- Closure of the initial valve in the well head, the production is stopped and the flow of gas downstream will result to be interrupted. In this phase the pressure on the line will remain more or less constant, since the flow of gas is stopped and the line conditions will be static.
- Closure of the valve that delimits the downstream segment.
- Opening of the vent valve: the gas which fills up the line segment is made to outgo in a controlled and gradual way. Inside the segment the pressure falls to zero, whereas in the remaining portion of the line it is unaltered.
- Filling-up of the segregated line section with a mixture of water and foaming agent, in proportions studied specifically to form a foam as much consistent and dense as possible. The preferred ratios are: water/foamer from 1:3 to 1:1; foam density ranging from 0.2 g/ml to 0.3 g/ml.

**The preferred water/foamer ratios were detected by means of the following laboratory** Test:
Method: Blender test upon varying the Water-Product ratio (from 90-10 to 10-90).
Fluids: Products Chimec, (not demi) drinking Water.
Stirring: 3 minutes at the maximum speed. Test temperature: 20°C.

The monitored parameters were: Quantity, quality and persistence of the produced foam. All tests were performed the conditions being equal, except for the variability in the Water-Product ratio which reproduces the ratios which can be those used in the field.

By way of example, the following table shows the tests carried out upon varying the ratio Water/CH Phoenix 6163 (mixture of not ionic surfactants) with the related comments about quantity and quality of the produced foam.

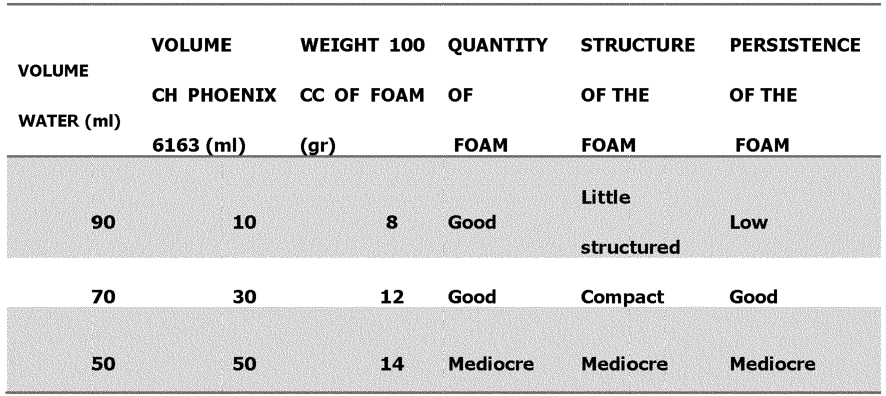

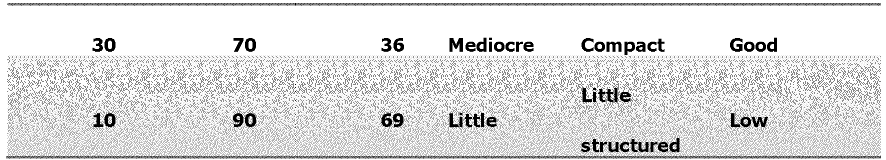

In order to better emphasize the effect of the Water-Foamer ratio about the type of produced foam, the foam fractions collected after stirring where weighed.

From the performed tests it results that upon increasing the quantity of foamer the foam density increases but it worsens in terms of quantity and quality; it can be concluded that for an effective foaming action it is necessary to avoid using quantities of foamer higher than 70% in mixture with water. Surely the range comprised between 30/70 and 70/30 (Water/Product) could guarantee an effective applicability in the field, but probably the best ratio remains 50/50 to avoid stabilizing excessively the foam.

The foam *pig* effectiveness results to be maximum if the isolated pipeline section will be completely filled-up, without leaving empty spaces in the upper portion of the pipeline.
- Opening of the initial valve, upstream of the segregated section; the pressure in the segment grows until equalizing to the well head pressure (for a well supplying continuously, often the well head pressure increases considerably once production is closed, until doubling or tripling with respect to the line initial pressure). In this phase the water/foamer mixture is pushed and compressed by the gas downstream, but since the final valve of the section is still closed, the liquid cannot move in any direction. Moreover, the liquid itself is saturated by the gas coming from the well head.
- Very gradual opening of the final valve, downstream of the segment; by opening gradually the valve, the gas pressure pushes the liquid towards the downstream line and the opening behaves like an aperture therethrough the liquid passes with growing speed, pushed by the strong pressure of well head, creating a strong turbulence and by mixing intimately the thrust gas with the water and the surfactant in solution.

The result will be the production of a very consistent foam, formed by the production gas trapped in bubbles in the water thanks to the presence of surfactant which increases the liquid surface tension. The foam will fill-up fully a quite extended line section, much more extended than the segment used for introducing the liquids.

The so formed foam cushion behaves like a *"chemical pig"* or "*foam pig"* that is like a plunger and, pushed by the gas pressure, it will be able to move water and any debris accumulated along the pipeline line.

The whole procedure can be concluded in very short periods of time (fractions of one hour or little more) and the production standstill is very limited over time, much shorter than the traditional applications of the mechanical pigs.

### External preparation of the foam

In the second mode for forming the foam cushion, the foam is produced externally with respect the line of pipes with means such as an autonomous apparatus, device or plant, placed parallelly with respect to the line and introduced in the line through a suitable shut-off, arranged for instruments or samplings.

In this mode it is not required that there is a segregable line segment, but it is simply required to have a shut-off, or suitable opening, downstream of the closing valve of the line in the well head.

The required procedures in this case will be:
- Closing of the line through the shut-off valve, that is the valve C in figure 2b or figure 3, for the shortest possible time.
- Insertion of the foam loading line through the shut-off described previously.
- Starting of the external means for producing the foam and insertion of the same inside the line, downstream of the closed valve.
- Once loaded the whole provided foam, total re-opening of the valve. The gas pressure accumulated in the well head will provide a powerful push, by transporting the formed foam pig thanks to the use of the external tool for the whole length of the line and carrying therewith all water and possible little persistent deposits.

The external means for producing the foam can be any device suitable for the foam production such as: a mixer, a high rate and high operating pressure pump and an aperture or a nozzle or any other method suitable to the foam production.

Said external means usually is inserted in a line in parallel as schematized by way of example in figures, but it could have even another geometry.

### Plant

The present description provides examples of the industrial plants suitable to implement the method of the invention.

The industrial plant is a plant for the production and/or transportation of natural or process gases, as above defined, comprising a pipeline for the transportation of gas or *pipeline,* equipped with means for generating a foam cushion inside the pipeline itself and suitable for the removal of deposits which impede the gas flow through the pipeline.

Alternatively, said plant is an oil-refining plant, equipped with the means for generating a foam cushion inside the pipeline of the discharge circuit of said plant and suitable to drainage of said pipeline which is performed between a refining operating cycle and the subsequent one as described above. Under drainage, as said above, the removal of exceeding gaseous residues is meant which have accumulated in the discharge pipeline ahead of the torch combustion area as described above.

The means for generating the foam cushion is represented at least by one segment of the pipeline itself (segregable) isolable from the rest of the pipeline and limited by an initial valve for closing the flow upstream and a final valve for closing downstream and provided with at least one external valve for opening to the atmosphere for venting the internal gases and for loading a foaming agent.

The isolable pipeline segment has a length ranging from 5 and 40 meters, even depending upon the diameter of the pipeline itself, for example 10, 15, 20, 25, 30, 35 meters. Said segment is provided with one or more additional valve cut-offs for the insertion of an instrument (thermometer, pressure gauge, ...) or for gas sampling.

In particular, the plant can comprise two or more isolable segments as described above in subsequent series separated from one another by a closing valve.

In another example, the pipeline does not require an isolable segment, but the means for generating the foam cushion is foam production means external and in parallel with respect to the pipeline itself. Such means comprises an apparatus and device suitable for generating the foam and a pipeline for introducing the foam in the main line. The external means for generating the foam can be a mixer, a high-flow rate and high operating pressure pump and an aperture or a nozzle.

The segregable segment as described above for the *in-situ* production or the plant in parallel for the external production of the foam are usually placed at the beginning of the pipeline near the well head therefrom the gas outflows. In this case the shut-off valve (well head valve) corresponds to the segment beginning valve or to the flow closing valve in case of external preparation of the foam.

In each case, the means for producing the foam cushion is placed upstream of the pipeline area obstructed by deposits.

Examples of plants according to the invention are illustrated in figure 2, panel B and 3 panels A and B.

### EXAMPLES

The invention is explained hereinafter in all details and operating conditions by means of embodiment examples which are purely by way of example and have no limitative effect.

### Example 1:

In order to verify the effectiveness of this technology, a test was performed for the removal of the liquids which have accumulated on a pipeline which transports the gas from a production station to a gas treating central station. The used product is based upon non-ionic surfactants, suitably mixed in water and glycols.

The purpose of the application is the removal of the water accumulated in the 5 valleys of a line of 15 km: the consequence of the water accumulation in line is the limitation of the gas production due to the accumulated liquid which causes an additional pressure drop.

The removal of the liquids takes place with the use of the foaming agent CHIMEC Phoenix 6163 by displacement thanks to the implementation of a foam cushion.

The references to this application are the pressure values in line obtained in the last procedure for launching the mechanical *pig (pigging),* which however has not been performed for several years; on these occasions, the pressure in line was decreased to around 6 bar, value which is to be considered the minimum obtainable once the line is wholly emptied of liquids. The quantity of moved water, then detected as arriving to the central station after pigging, was about 13 m³.

The application result depends upon the selection of the suitable product. The used product was properly selected with (above-described) laboratory test, both as chemical composition, and for the volume/volume ratios to be kept between product and water additioned in the line, that is water/foamer ratio ranging from 1:3 to 1:1; foam density ranging from 0.1 g/ml and 0.5 g/ml.

At last, the application procedure has to be aimed at creating a compact and effective foam front for the purpose of the displacement.

The use of CHIMEC anti-foaming agent is required for controlling the possible negative effects of the foam and to protect the plant and in particular the separator inletting the central station, having limited volume.

### Application procedure (Figure 2B)

CHIMEC*foamer* was loaded at the beginning of the line in the section comprised between PCV (Pressure Control Valve - valve B in figure) and the shut-off valve positioned few meters upstream of the PCV itself (valve A in figures). The treatment provides two batches of foaming agent and water. The volume of the considered line stump is about 120 litres.

The loading of each batch consists of foaming agent and water in ratio 2:1. The total loaded liquids are about 120 litres of product Chimec Phoenix 6163 and about 60 litres of water.

The product introduction in this point guarantees the formation of an effective foam if the valve opening is performed according to the here below illustrated sequence.

It is important to respect the loading order so that foaming agent and water are introduced in the line segment in small quantities and alternatively (example: 20 litres of product + 10 of water for about four times) in order to guarantee an optimum mixing.

It is important to guarantee the total filling-up of the line by setting to zero the empty volume which would create preferential channels for the passage of gas above the liquid mixture, by preventing the formation of an effective foam due to a low density and persistence of the same.

During re-opening all valves have to be opened slowly. The procedure consists of operations to be performed preliminarily in the central station, a procedure for applying foamer and antifoam and monitoring activity for the whole treatment.

Preliminary procedures in central station:
- Drainage of the separator so as to have the maximum concentration of initial antifoam and increase in the useful space for the arriving liquids.
- Drainage of the *pig receiver* to allow reliable samplings.

Application procedure:
1. Closing of the valves A and C and depressurizing of the line segment by disassembling one of the manometers of the line stump. Such procedure will be performed according to the plant safety procedures.
2. Loading of 1° batch in the section A-B (by closing for this purpose valve B, flow rate in manual mode). The loading will have to be performed through the nozzle of one of the manometers as shown in figure 2. Another nozzle will have to be kept free for venting the line during loading.
3. Leaving that the line upstream of the valve A loads due to the well head pressure (in the test about 25 bars are reached).
4. Pressurizing and launching of 1° batch: B is opened slightly (so that the mixture passes through the restriction). A is opened totally and soon after C partially, the minimum required to allow the passage. The fluid is left to flow in this mode for 5 minutes, after that even the valves B and C are opened totally.
5. Repeating points 1 to 4 for loading 2° batch.
6. Injection of the antifoam continuously soon after having launched the first batch of foamer, with dosing pump at 60% (first hour) and 80% (until the arrival of all displaced liquid).

A digital manometer recorded the course of the pressures in line downstream of PCV. The other monitored parameters were the gas and water productions of the single wells and the overall one.

The procedure for adding foamer and water lasted few tens of minutes and the group of procedures for creating the foam cushion requested to stop the production for about one hour.

The test had positive result with an important increase in the average gas production. The displaced water was about 13 m³ and the pressure in line decreased from 15 bar to 6 bar, value analogous to the one obtained with the mechanical pigging procedure. The value of the counterpressure in line which at first was estimated to be around 10 bar decreased to about 0.5 bar as illustrated in Figure 4.

After treatment an increase in the overall gas production of 5.9% took place, with some peaks of production for some wells even increased by 138%.

As already said, in the arrival station (central station) about 13 m³ of water were collected after less than two hours from the application of the foaming agent.

The arrival of the water pushed by the foam was well managed by the additivation of the antifoam agent in central station so as not to cause the plant shut down.

### Example 2:

On the same line of example 1, the application of the foam cushion was repeated, but without using the isolable line segment and the valves already existing for generating foam itself.

The foam cushion was generated by external means, described in the above-illustrated scheme (Figure 3, panels A and B). The used amounts of water and product are more or less the same of example 1, but clearly it was not necessary to open and drain the line stump.

The procedures for introducing the foam into the line took place in few minutes and the production interruption was further shortened.

The results were fully comparable with those described above, obtained by generating the foam inside the line.

The application of external means is extremely important since it allows to create the foam cushion even in lines which have not segregable stumps and valves at short distance therebetween. With this mode simply shut-off valve is required to stop the production (which is always present in any gas field) and a shut-off (for example an instrument socket) for introducing the foam.

### Example 3

A refinery discharge line, having sizes equal to 76.2 mm (three inches), was drained by using the foam cushion procedure.

The line had a significant length (greater than 150 m) and had two valleys having big sizes. Then it was necessary to control the behaviour of the foam during the passage of the valleys (water hammer phenomenon, pressure drop, foam drop).

The application was very positive, it showed that the line route is not an obstacle, no problem for the foam cushion to go along the two valleys, the foam was collected in the final container without difficulty. No excessive odour or heat, no hot effluent, complete removal of the pyrophoric risk. The line was cleaned perfectly and the drainage allowed to perform the maintenance work by performing even hot weldings, without additional cleaning. An antifoam was present in the final container to neutralize the foam.

In the table the main pieces of information are collected, obtained from preceding line drainages with the classical techniques compared to the application of the new technology.

| | **Classical decontamination with vapour** | **Decontamination with Foam pig** | **Comments** |
|---|---|---|---|
| **Installation duration** | 2 hours | 2 hours | The used materials are identical |
| **Quantity of required chemical product** | One barrel (200 litres) | Less than 50 litres | Very little product to produce the foam |
| **Decontamination duration** | 24 hours | 8 hours | Increased effectiveness |
| **Quantity of effluents** | from 1 to 5 m3 | Less than 200 litres | Effluents consisted of: antifoam, foaming product and residual hydrocarbons from the line |
| **Effectiveness** | Zero explosivity and zero hydrocarbons after 10 hours | Zero explosivity and zero volatile hydrocarbons after 1 hour | At the beginning the explosivity was about 12% and there were more than 10,000 ppm of volatile hydrocarbons |
| **HSE** | Risks of burns | No increase in temperature | Nitrogen use to be managed |

## Claims

1. A method for the removal of deposits accumulated in the pipelines of production and/or transport of natural and/or process gases comprising the following steps:
a) the flow of gas along the pipeline is blocked by a shut-off valve;
b) a compact foam cushion is provided which completely fills-up a section of the pipeline downstream of the shut-off valve and upstream of the section containing the deposits;
the flow of gas that pushes the foam cushion along the pipeline carrying the deposits with it is reactivated, wherein the foam cushion is produced by mixing one or more surfactants and gas or air in a solvent selected from water, aqueous solution or organic solution.

2. The method according to claim 1 wherein the deposits are deposits of water and/or condensate materials.

3. The method according to claims 1 or 2, wherein the foam cushion is produced *in situ* in the pipeline or is produced externally to the pipeline and subsequently introduced into the pipeline.

4. The method according to claim 3 wherein the surfactant is selected from: oxyethylated surfactants, oxyethylated phenols, oxyethylated fatty acids, oxyethylated alkyl monoethanolamides, lauryl beta imino-propionates, oxy-ethylene oxy-propylene copolymers, anionic surfactants, acid surfactants, basic or amphoteric surfactants or solid soaps.

5. The method according to claim 4 wherein the acid surfactants are selected from: coco-carboxypropionic acid, acrylic acid/dimethyl-diallyl ammonium chloride copolymer, coconut trimethyl ammonium chloride, C9-11 alkyl (linear)-alcohol alkoxy sulphate, C6-10 alkyl (linear)-alcohol alkoxy sulphate, triethyleneglycol-monohexyl-ether sulfate, C14-16 alpha olefin sulfonate, ethylenediamine tetra acetic acid trisodium salt, oleic acid, dodecanoic acid, coconut acid, octadecanoic acid, lauryl acid, myristic acid, hexadecanoic acid, octanoic acid, coco-dimethylamine-oxide, cocot-amidopropyl sulfo betaine, coconut-amidopropyl betaine, coconut-amidopropyl amine oxide, tall oil bis-hydroxyethyl glycinate, coco-diethanolamide, oleic acid diethanolamide, coco-N,N-bis-hydroxyethyl amide, oxyethylated coco-amine, laurylamine oxide, dihydroxy ethyl C12-15 alkoxypropyl amine oxide, coco-ampho-acetate, coco-ampho-propionate, coco-ampho-hydroxypropyl sulfonate, lauryl-ampho-acetate, lauryl-ampho-dipropionate, capryl-ampho-diacetate, sodium lauryl-imino propionate, disodium talloil iminodipropionate, stearyl ampho-propyl sulphonate.

6. The method according to claim 3 wherein the foam cushion is produced *in situ* in the pipeline and the method comprises the following steps:
- a section of pipeline is isolated through an initial valve and a final valve that delimits the downstream segment;
- it is vented in the segregated section by reducing its pressure to atmospheric pressure;
- the segregated line section is filled with a mixture of water and foamer;
- the initial valve is opened, upstream of the segregated section;
- the final valve is opened, downstream of the segregated segment by creating a strong turbulence downstream of the valve that intimately mixes the thrust gas with the water and the surfactant in solution;
- the gas pressure is allowed to push the foam cushion along the pipeline and the foam cushion pushes the water and any debris accumulated up to a collection station.

7. The method according to claim 6 wherein the sequence of all steps is repeated two or more times.

8. The method according to claim 3 wherein the foam cushion is produced externally to the pipeline and the method comprises the following steps:
- the pipeline is closed by means of a shut-off valve upstream of the section containing the deposits;
- the foam cushion is produced externally to the pipeline through suitable means;
- the foam cushion is inserted inside the pipeline, downstream of the shut-off valve, through a side-load line;
- the shut-off valve is completely pre-opened;
- the gas pressure is allowed to push the foam cushion along the pipeline and the foam cushion pushes the water and any debris accumulated up to a collection station.

9. The method according to claim 8, wherein the suitable means to produce the foam cushion is selected from: a mixer, a high flow-rate and high operating pressure pump, an orifice or nozzle, a pressure reducer.

10. A foaming agent comprising, or consisting of, a surfactant selected from oxyethylated surfactants, oxyethylated phenols, oxyethylated fatty acids, oxyethylated alkyl monoethanolamides, lauryl beta imino-propionates, oxy-ethylene oxy-propylene copolymers, anionic surfactants, acid surfactants, basic or amphoteric surfactants or solid soaps in a method according to anyone of claims 1 to 3 and 7 to 9, for preparing a compact foam cushion.

11. The foaming agent according to claim 10 wherein the surfactant is selected from: coco-carboxypropionic acid, acrylic acid/dimethyl-diallyl ammonium chloride copolymer, coconut trimethyl ammonium chloride, C9-11 alkyl (linear)-alcohol alkoxy sulphate, C6-10 alkyl (linear)-alcohol alkoxy sulphate, triethyleneglycol-monohexyl-ether sulfate, C14-16 alpha olefin sulfonate, ethylenediamine tetra acetic acid trisodium salt, oleic acid, dodecanoic acid, coconut acid, octadecanoic acid, lauryl acid, myristic acid, hexadecanoic acid, octanoic acid, coco-dimethylamine-oxide, coco-amidopropyl sulfo betaine, coconut-amidopropyl betaine, coconut-amidopropyl amine oxide, tall oil bis-hydroxyethyl glycinate, coco-diethanolamide, oleic acid diethanolamide, coco-N,N-bis-hydroxyethyl amide, oxyethylated coco-amine, laurylamine oxide, dihydroxy ethyl C12-15 alkoxypropyl amine oxide, coco-ampho-acetate, coco-ampho-propionate, coco-ampho-hydroxypropyl sulfonate, lauryl-ampho-acetate, lauryl-ampho-dipropionate, capryl-ampho-diacetate, sodium lauryl-imino propionate, disodium talloil iminodipropionate, stearyl ampho-propyl sulphonate.

12. The foaming agent according to one of claims 10 or 11 comprising water and surfactant in water/surfactant ratios from 1:3 to 1:1, wherein the surfactant is selected from coco-carboxypropionic acid, acrylic acid/dimethyl-diallyl ammonium chloride copolymer, coconut trimethyl ammonium chloride, C9-11 alkyl (linear)-alcohol alkoxy sulphate, C6-10 alkyl (linear)-alcohol alkoxy sulphate, triethyleneglycol-monohexyl-ether sulfate, C14-16 alpha olefin sulfonate, ethylenediamine tetra acetic acid trisodium salt, oleic acid, dodecanoic acid, coconut acid, octadecanoic acid, lauryl acid, myristic acid, hexadecanoic acid, octanoic acid, coco-dimethylamine-oxide, cocot-amidopropyl sulfo betaine, coconut-amidopropyl betaine, coconut-amidopropyl amine oxide, tall oil bis-hydroxyethyl glycinate, coco-diethanolamide, oleic acid diethanolamide, coco-N,N-bis-hydroxyethyl amide, oxyethylated coco-amine, laurylamine oxide, dihydroxy ethyl C12-15 alkoxypropyl amine oxide, coco-ampho-acetate, coco-ampho-propionate, coco-ampho-hydroxypropyl sulfonate, lauryl-ampho-acetate, lauryl-ampho-dipropionate, capryl-ampho-diacetate, sodium lauryl-imino propionate, disodium talloil iminodipropionate, stearyl ampho-propyl sulphonate,

13. A use of a foaming agent comprising, or consisting of, a surfactant selected from oxyethylated surfactants, oxyethylated phenols, oxyethylated fatty acids, oxyethylated alkyl monoethanolamides, lauryl beta imino-propionates, oxy-ethylene oxy-propylene copolymers, anionic surfactants, acid surfactants, basic or amphoteric surfactants or solid soaps in a method according to anyone of claims 1 to 3 and 7 to 9, for the preparation of a foam cushion.

14. The use according to claim 13 wherein the surfactant is selected from: coco-carboxypropionic acid, acrylic acid/dimethyl-diallyl ammonium chloride copolymer, coconut trimethyl ammonium chloride, C9-11 alkyl (linear)-alcohol alkoxy sulphate, C6-10 alkyl (linear)-alcohol alkoxy sulphate, triethyleneglycol-monohexyl-ether sulfate, C14-16 alpha olefin sulfonate, ethylenediamine tetra acetic acid trisodium salt, oleic acid, dodecanoic acid, coconut acid, octadecanoic acid, lauryl acid, myristic acid, hexadecanoic acid, octanoic acid, coco-dimethylamine-oxide, cocot-amidopropyl sulfo betaine, coconut-amidopropyl betaine, coconut-amidopropyl amine oxide, tall oil bis-hydroxyethyl glycinate, coco-diethanolamide, oleic acid diethanolamide, coco-N,N-bis-hydroxyethyl amide, oxyethylated coco-amine, laurylamine oxide, dihydroxy ethyl C12-15 alkoxypropyl amine oxide, coco-ampho-acetate, coco-ampho-propionate, coco-ampho-hydroxypropyl sulfonate, lauryl-ampho-acetate, lauryl-ampho-dipropionate, capryl-ampho-diacetate, sodium lauryl-imino propionate, disodium talloil iminodipropionate, stearyl ampho-propyl sulphonate.

15. A use of a foam cushion produced as described in claims 1 to 9, for the removal of unwished gases existing in the pipes of industrial plants and/or for the drainage of said pipes.

## Patentansprüche

1. Verfahren für die Entfernung von Ablagerungen, die sich in den Rohrleitungen einer Produktion und/oder eines Transports von Erd- und/oder Prozessgasen angesammelt haben, umfassend die folgenden Schritte:
a) der Gasstrom entlang der Rohrleitung wird durch ein Absperrventil blockiert;
b) ein kompaktes Schaumkissen wird bereitgestellt, das einen Abschnitt der Rohrleitung stromabwärts des Absperrventils und stromaufwärts des Abschnitts, der die Ablagerungen enthält, vollständig ausfüllt;
der Gasstrom, der das Schaumkissen entlang der Rohrleitung schiebt, das die Ablagerungen mit sich trägt, wird reaktiviert, wobei das Schaumkissen durch Mischen von einem oder mehreren Tensiden und Gas oder Luft in einem Lösungsmittel produziert wird, das aus Wasser, einer wässrigen Lösung oder einer organischen Lösung ausgewählt ist.

2. Verfahren nach Anspruch 1, wobei die Ablagerungen Ablagerungen von Wasser und/oder Kondensatmaterialien sind.

3. Verfahren nach Anspruch 1 oder 2, wobei das Schaumkissen *in situ* in der Pipeline produziert wird oder außerhalb der Pipeline produziert und anschließend in die Pipeline eingeführt wird.

4. Verfahren nach Anspruch 3, wobei das Tensid ausgewählt ist aus:
oxyethylierten Tensiden, oxyethylierten Phenolen, oxyethylierten Fettsäuren, oxyethylierten Alkylmonoethanolamiden, Lauryl-beta-iminopropionaten, Oxyethylen-Oxypropylen-Copolymeren, anionischen Tensiden, sauren Tensiden, basischen oder amphoteren Tensiden oder festen Seifen.

5. Verfahren nach Anspruch 4, wobei die sauren Tenside ausgewählt sind aus: Kokoscarboxypropionsäure, Acrylsäure/Dimethyl-Diallyl-Ammoniumchlorid-Copolymer, Kokosnusstrimethylammoniumchlorid, C9-11-Alkyl-(linearer)-Alkohol-Alkoxysulfat, C6-10-Alkyl (linearer)-Alkohol-Alkoxysulfat, Triethylenglykolmonohexylethersulfat, C14-16-Alpha-Olefinsulfonat, Ethylendiamintetraessigsäuretrinatriumsalz, Olsäure, Dodecansäure, Kokosnusssäure, Octadecansäure, Laurylsäure, Myristinsäure, Hexadecansäure, Octansäure, Kokosdimethylaminoxid, Kokosamidopropylsulfobetain, Kokosnussamidopropylbetain, Kokosnussamidopropylaminoxid, Tallöl-bishydroxyethylglycinat, Kokosdiethanolamid, Ölsäurediethanolamid, Kokos-N,N-bis-hydroxyethylamid, oxyethyliertem Kokosamin, Laurylaminoxid, Dihydroxyethyl-C12-15-alkoxypropylaminoxid, Kokosamphoacetat, Kokosamphopropionat, Kokosamphohydroxypropylsulfonat, Laurylamphoacetat, Laurylamphodipropionat, Caprylamphodiacetat, Natriumlauryliminopropionat, Dinatriumtallöliminodipropionat, Stearylamphopropylsulfonat.

6. Verfahren nach Anspruch 3, wobei das Schaumkissen *in situ* in der Pipeline produziert wird und das Verfahren die folgenden Schritte umfasst:
- ein Abschnitt der Rohrleitung wird durch ein Anfangsventil und ein Endventil isoliert, das den stromabwärtigen Abschnitt begrenzt;
- er wird in dem abgetrennten Bereich durch Vermindern seines Drucks auf Atmosphärendruck entlüftet;
- der abgetrennte Leitungsabschnitt wird mit einer Mischung aus Wasser und Schaummittel gefüllt;
- das Anfangsventil wird stromaufwärts des abgetrennten Abschnitts geöffnet;
- das Endventil wird stromabwärts des abgetrennten Segments durch Erzeugen einer starken Turbulenz stromabwärts des Ventils geöffnet, die das Schubgas mit dem Wasser und dem Tensid in der Lösung innig mischt;
- dem Gasdruck wird ermöglicht, das Schaumkissen entlang der Rohrleitung zu schieben und das Schaumkissen schiebt das Wasser und beliebige angesammelte Ablagerungen nach oben zu einer Sammelstation.

7. Verfahren nach Anspruch 6, wobei die Abfolge aller Schritte zwei- oder mehrmals wiederholt wird.

8. Verfahren nach Anspruch 3, wobei das Schaumkissen außerhalb der Rohrleitung produziert wird und das Verfahren die folgenden Schritte umfasst:
- die Rohrleitung wird stromaufwärts des Abschnitts, der die Ablagerungen enthält, mittels eines Absperrventils verschlossen;
- das Schaumkissen wird außerhalb der Rohrleitung durch ein geeignetes Mittel produziert;
- das Schaumkissen wird über eine Seitenladeleitung stromabwärts des Absperrventils in die Rohrleitung eingeführt;
- das Absperrventil wird wieder vollständig geöffnet;
- dem Gasdruck wird ermöglicht, das Schaumkissen entlang der Rohrleitung zu schieben und das Schaumkissen schiebt das Wasser und beliebige angesammelte Ablagerungen nach oben zu einer Sammelstation.

9. Verfahren nach Anspruch 8, wobei das geeignete Mittel, um das Schaumkissen zu produzieren, ausgewählt ist aus: einem Mischer, einer Pumpe mit hoher Liefermenge und hohem Betriebsdruck, einer Öffnung oder Düse, einem Druckminderer.

10. Schaummittel, umfassend oder bestehend aus einem Tensid, das aus oxyethylierten Tensiden, oxyethylierten Phenolen, oxyethylierten Fettsäuren, oxyethylierten Alkylmonoethanolamiden, Lauryl-beta-iminopropionaten, Oxyethylen-Oxypropylen-Copolymeren, anionischen Tensiden, sauren Tensiden, basischen oder amphoteren Tensiden oder festen Seifen ausgewählt ist, in einem Verfahren nach einem der Ansprüche 1 bis 3 und 7 bis 9 zum Herstellen eines kompakten Schaumkissens.

11. Schaummittel nach Anspruch 10, wobei das Tensid ausgewählt ist aus: Kokoscarboxypropionsäure, Acrylsäure/Dimethyl-Diallyl-Ammoniumchlorid-Copolymer, Kokosnusstrimethylammoniumchlorid, C9-11-Alkyl-(linearer)-Alkohol-Alkoxysulfat, C6-10-Alkyl (linearer)-Alkohol-Alkoxysulfat, Triethylenglykolmonohexylethersulfat, C14-16-Alpha-Olefinsulfonat, Ethylendiamintetraessigsäuretrinatriumsalz, Olsäure, Dodecansäure, Kokosnusssäure, Octadecansäure, Laurylsäure, Myristinsäure, Hexadecansäure, Octansäure, Kokosdimethylaminoxid, Kokosamidopropylsulfobetain, Kokosnussamidopropylbetain, Kokosnussamidopropylaminoxid, Tallöl-bishydroxyethylglycinat, Kokosdiethanolamid, Ölsäurediethanolamid, Kokos-N,N-bis-hydroxyethylamid, oxyethyliertem Kokosamin, Laurylaminoxid, Dihydroxyethyl-C12-15-alkoxypropylaminoxid, Kokosamphoacetat, Kokosamphopropionat, Kokosamphohydroxypropylsulfonat, Laurylamphoacetat, Laurylamphodipropionat, Caprylamphodiacetat, Natriumlauryliminopropionat, Dinatriumtallöliminodipropionat, Stearylamphopropylsulfonat.

12. Schaummittel nach einem der Ansprüche 10 oder 11, umfassend Wasser und Tensid in Wasser/Tensid-Verhältnissen von 1 : 3 bis 1 : 1, wobei das Tensid ausgewählt ist aus Kokoscarboxypropionsäure, Acrylsäure/Dimethyl-Diallyl-Ammoniumchlorid-Copolymer, Kokosnusstrimethylammoniumchlorid, C9-11-Alkyl-(linearer)-Alkohol-Alkoxysulfat, C6-10-Alkyl (linearer)-Alkohol-Alkoxysulfat, Triethylenglykolmonohexylethersulfat, C14-16-Alpha-Olefinsulfonat, Ethylendiamintetraessigsäuretrinatriumsalz, Ölsäure, Dodecansäure, Kokosnusssäure, Octadecansäure, Laurylsäure, Myristinsäure, Hexadecansäure, Octansäure, Kokosdimethylaminoxid, Kokosamidopropylsulfobetain, Kokosnussamidopropylbetain, Kokosnussamidopropylaminoxid, Tallöl-bishydroxyethylglycinat, Kokosdiethanolamid, Ölsäurediethanolamid, Kokos-N,N-bis-hydroxyethylamid, oxyethyliertem Kokosamin, Laurylaminoxid, Dihydroxyethyl-C12-15-alkoxypropylaminoxid, Kokosamphoacetat, Kokosamphopropionat, Kokosamphohydroxypropylsulfonat, Laurylamphoacetat, Laurylamphodipropionat, Caprylamphodiacetat, Natriumlauryliminopropionat, Dinatriumtallöliminodipropionat, Stearylamphopropylsulfonat.

13. Verwendung eines Schaummittels, umfassend oder bestehend aus einem Tensid, das aus oxyethylierten Tensiden, oxyethylierten Phenolen, oxyethylierten Fettsäuren, oxyethylierten Alkylmonoethanolamiden, Lauryl-beta-iminopropionaten, Oxyethylen-Oxypropylen-Copolymeren, anionischen Tensiden, sauren Tensiden, basischen oder amphoteren Tensiden oder festen Seifen ausgewählt ist, in einem Verfahren nach einem der Ansprüche 1 bis 3 und 7 bis 9 für die Herstellung eines Schaumkissens.

14. Verwendung nach Anspruch 13, wobei das Tensid ausgewählt ist aus: Kokoscarboxypropionsäure, Acrylsäure/Dimethyl-Diallyl-Ammoniumchlorid-Copolymer, Kokosnusstrimethylammoniumchlorid, C9-11-Alkyl-(linearer)-Alkohol-Alkoxysulfat, C6-10-Alkyl (linearer)-Alkohol-Alkoxysulfat, Triethylenglykolmonohexylethersulfat, C14-16-Alpha-Olefinsulfonat, Ethylendiamintetraessigsäuretrinatriumsalz, Ölsäure, Dodecansäure, Kokosnusssäure, Octadecansäure, Laurylsäure, Myristinsäure, Hexadecansäure, Octansäure, Kokosdimethylaminoxid, Kokosamidopropylsulfobetain, Kokosnussamidopropylbetain, Kokosnussamidopropylaminoxid, Tallöl-bishydroxyethylglycinat, Kokosdiethanolamid, Ölsäurediethanolamid, Kokos-N,N-bis-hydroxyethylamid, oxyethyliertem Kokosamin, Laurylaminoxid, Dihydroxyethyl-C12-15-alkoxypropylaminoxid, Kokosamphoacetat, Kokosamphopropionat, Kokosamphohydroxypropylsulfonat, Laurylamphoacetat, Laurylamphodipropionat, Caprylamphodiacetat, Natriumlauryliminopropionat, Dinatriumtallöliminodipropionat, Stearylamphopropylsulfonat.

15. Verwendung eines Schaumkissens, das wie in den Ansprüchen 1 bis 9 beschrieben produziert wird, für die Entfernung von unerwünschten Gasen, die in den Rohrleitungen von Industrieanlagen vorhanden sind, und/oder für die Drainage der Rohrleitungen.

## Revendications

1. Procédé destiné à l'élimination de dépôts accumulés dans les pipelines de production et/ou de transport de gaz naturels et/ou de gaz de traitement, comprenant les étapes suivantes :
a) l'écoulement de gaz le long du pipeline est bloqué par une vanne d'arrêt ;
b) un coussin en mousse compacte est prévu pour remplir entièrement une section du pipeline en aval de la vanne d'arrêt et en amont de la section contenant les dépôts ;
l'écoulement de gaz qui pousse le coussin en mousse le long du pipeline en transportant les dépôts est réactivé, dans lequel le coussin en mousse est produit en mélangeant un ou plusieurs tensioactifs et du gaz ou de l'air dans un solvant choisi parmi l'eau, une solution aqueuse ou une solution organique.

2. Procédé selon la revendication 1, dans lequel les dépôts sont des dépôts d'eau et/ou de matériaux de condensation.

3. Procédé selon les revendications 1 ou 2, dans lequel le coussin en mousse est produit *in situ* dans le pipeline ou est produit à l'extérieur du pipeline et introduit par la suite dans le pipeline.

4. Procédé selon la revendication 3, dans lequel le tensioactif est choisi parmi : des tensioactifs oxyéthylés, des phénols oxyéthylés, des acides gras oxyéthylés, des monoéthanolamides d'alkyle oxyéthylés, des bêta-imino-propionates de lauryle, des copolymères d'oxy-éthylène oxy-propylène, des tensioactifs anioniques, des tensioactifs acides, des tensioactifs basiques ou amphotères, ou des savons solides.

5. Procédé selon la revendication 4, dans lequel les tensioactifs acides sont choisis parmi : un acide coco-carboxypropionique, un copolymère acide acrylique/chlorure d'ammonium diméthyl-diallyle, un chlorure d'ammonium triméthylique de coco, un alcoxy-sulfate d'alkyle (linéaire) en C9 à 11, un alcoxy-sulfate d'alkyle (linéaire)en C6 à 10, un sulfate de triéthylèneglycol-monohexyl-éther, un sulfonate alpha oléfine en C14 à 16, un sel trisodique de l'acide éthylènediamine tétra acétique, un acide oléique, un acide dodécanoïque, un acide de coco, un acide octadécanoïque, un acide lauryle, un acide myristique, un acide hexadécanoïque, un acide octanoïque, un oxyde de coco-diméthylamine, un sulfo bétaïne de cocot-amidopropyle, un coco-amidopropyle betaine, un oxyde aminé de coco-amidopropyle, un tall oil bis-hydroxyéthyle glycinate, un coco-diéthanolamide, un acide oléique diethanolamide, un coco-N,N-bis-hydroxyethyl amide, un coco-amine oxyéthylé, un oxyde de laurylamine, un oxyde aminé alkoxypropyle de dihydroxy éthyle en C12 à 15, un coco-ampho-acétate, un coco-ampho-propionate, un coco-ampho-hydroxypropyl sulfonate, un lauryl-ampho-acétate, un lauryl-ampho-dipropionate, un capryl-ampho-diacétate, un sodium lauryl-imino propionate, un disodium tall oil iminodipropionate, un sulfonate de stéaryle ampho-propyle.

6. Procédé selon la revendication 3, dans lequel le coussin en mousse est produit *in situ* dans le pipeline et le procédé comprend les étapes suivantes :
- une section de pipeline est isolé par une vanne initiale et une vanne finale qui délimite le segment en aval ;
- il est évacué dans la section séparée en réduisant sa pression à la pression atmosphérique ;
- la section de ligne séparée est remplie d'un mélange d'eau et d'agent moussant ;
- la vanne initiale est ouverte, en amont de la section séparée ;
- la vanne finale est ouverte, en aval du segment séparé, en créant une forte turbulence en aval de la vanne qui mélange intimement le gaz de poussée avec l'eau et le tensioactif en solution ;
- la pression de gaz est autorisée à pousser le coussin en mousse le long du pipeline et le coussin en mousse pousse l'eau et tout débris accumulé jusqu'à une station de collecte.

7. Procédé selon la revendication 6, dans lequel la séquence de toutes les étapes est répétée deux fois ou plus.

8. Procédé selon la revendication 3, dans lequel le coussin en mousse est produit à l'extérieur du pipeline et le procédé comprend les étapes suivantes :
- le pipeline est fermé au moyen d'une vanne d'arrêt en amont de la section contenant les dépôts ;
- le coussin en mousse est produit à l'extérieur du pipeline par des moyens appropriés ;
- le coussin en mousse est inséré à l'intérieur du pipeline, en aval de la vanne d'arrêt, par une ligne de charge latérale ;
- la vanne d'arrêt est entièrement rouverte ;
- la pression de gaz est autorisée à pousser le coussin en mousse le long du pipeline et le coussin en mousse pousse l'eau et tout débris accumulé jusqu'à une station de collecte.

9. Procédé selon la revendication 8, dans lequel le moyen approprié pour produire le coussin en mousse est choisi parmi : un mélangeur, une pompe à haut débit et à haute pression de fonctionnement, un orifice ou une buse, un réducteur de pression.

10. Agent moussant comprenant, ou constitué de, un tensioactif choisi parmi des tensioactifs oxyéthylés, des phénols oxyéthylés, des acides gras oxyéthylés, des monoéthanolamides d'alkyle oxyéthylés, des bêta-imino-propionates de lauryle, des copolymères d'oxy-éthylène-oxy-propylène, des tensioactifs anioniques, des tensioactifs acides, des tensioactifs basiques ou amphotères ou des savons solides dans un procédé selon l'une quelconque des revendications 1 à 3 et 7 à 9, pour la préparation d'un coussin en mousse compacte.

11. Agent moussant selon la revendication 10, dans lequel le tensioactif est choisi parmi : un acide coco-carboxypropionique, un copolymère d'acide acrylique et de chlorure d'ammonium diméthyl-diallyle, un chlorure d'ammonium triméthylique de coco, un sulfate d'alcoxy-alcool (linéaire) en C9 à 11, un sulfate d'alcoxy-alcool (linéaire) en C6 à 10, un sulfate de triéthylèneglycol-monohexyl-éther, un sulfonate alpha oléfine en C14 à 16, un sel trisodique de l'acide éthylènediamine tétra acétique, un acide oléique, un acide dodécanoïque, un acide de coco, un acide octadécanoïque, un acide laurique, un acide myristique, un acide hexadécanoïque, un acide octanoïque, un oxyde de coco-diméthylamine, un coco-amidopropyle sulfo bétaïne, un coco-amidopropyl betaine, un oxyde aminé de coco-amidopropyle, un tall oil bis-hydroxyéthyle glycinate, un coco-diéthanolamide, un acide oléique diéthanolamide, un coco- N,N-bis-hydroxyethyle amide, un coco-amine oxyéthylé, un oxyde de laurylamine, un oxyde aminé alkoxypropyle de dihydroxy éthyle en C12 à 15, un coco-ampho-acétate, un coco-ampho-propionate, un coco-ampho-hydroxypropyle sulfonate, un lauryl-ampho-acétate, un lauryl-ampho-dipropionate, un capryl-ampho-diacétate, un sodium lauryl-imino propionate, un disodium tall oil iminodipropionate, un sulfonate de stéaryle ampho-propyle.

12. Agent moussant selon l'une des revendications 10 ou 11 comprend de l'eau et un tensioactif dans des rapports eau/tensioactif de 1:3 à 1:1, dans lequel le tensioactif est choisi parmi un acide coco-carboxypropionique, un copolymère d'acide acrylique et de chlorure d'ammonium diméthyl-diallyle, un chlorure d'ammonium triméthylique de coco, un sulfate d'alcool alkylique (linéaire) en C9 à 11, un sulfate d'alcool alkylique (linéaire) en C6 à 10, un triéthylèneglycol-monohexyl-éther sulfate, un sulfonate alpha oléfine en C14 à 16, un sel trisodique de l'acide éthylènediamine tétra acétique, un acide oléique, un acide dodécanoïque, un acide de coco, un acide octadécanoïque, un acide de lauryle, un acide myristique, un acide hexadécanoïque, un acide octanoïque, un oxyde de coco-diméthylamine, un sulfo betaine de cocot-amidopropyl, une betaine de coco-amidopropyle, un oxyde aminé de coco-amidopropyle, un tall oil bis-hydroxyéthyle glycinate, un coco-diéthanolamide, un diéthanolamide acide oléique, un amide de coco-N,N-bis-hydroxyéthyle, un coco-amine oxyéthylaté, un oxyde de laurylamine, un oxyde de dihydroxyéthyle en C12 à 15 alkoxypropylamine, un coco-ampho-acétate, un coco-ampho-propionate, un sulfonate de coco-ampho-hydroxypropyle, un lauryl-ampho-acétate, un lauryl-ampho-dipropionate, un capryl-ampho-diacétate, un propionate de sodium lauryl-imino, un disodium tall oil iminodipropionate, un sulfonate de stéaryle ampho-propyle.

13. Utilisation d'un agent moussant comprenant, ou constitué de, un tensioactif choisi parmi des tensioactifs oxyéthylés, des phénols oxyéthylés, des acides gras oxyéthylés, des monoéthanolamides d'alkyle oxyéthylés, des bêta-imino-propionates de lauryle, des copolymères d'oxyéthylène-oxy-propylène, des tensioactifs anioniques, des tensioactifs acides, des tensioactifs basiques ou amphotères ou des savons solides dans un procédé selon l'une quelconque des revendications 1 à 3 et 7 à 9, pour la préparation d'un coussin en mousse.

14. Utilisation selon la revendication 13, dans laquelle le tensioactif est choisi parmi : un acide coco-carboxypropionique, un copolymère acide acrylique/chlorure d'ammonium diméthyl-diallyle, un chlorure d'ammonium triméthylique de coco, un alcoxy-sulfate d'alkyle (linéaire) en C9 à 11, alcoxy-sulfate d'alkyle (linéaire) en C6 à 10, un sulfate de triéthylèneglycol-monohexyl-éther, un sulfonate alpha oléfine en C14 à 16, un sel trisodique de l'acide éthylènediamine tétra acétique, un acide oléique, un acide dodécanoïque, un acide de coco, un acide octadécanoïque, un acide laurique, un acide myristique, un acide hexadécanoïque, un acide octanoïque, un oxyde de coco-diméthylamine, un sulfo bétaïne de cocot-amidopropyl, une betaine de coco-amidopropyl, un oxyde aminé de cocot-amidopropyle, un tall oil bis-hydroxyethyl glycinate, un coco-diethanolamide, une diethanolamide acide oléique, un coco-N,N-bis-hydroxyethylamide, un coco-amine oxyéthylée, un oxyde de laurylamine, un oxyde aminé alkoxypropyle de dihydroxy éthyle en C12 à 15, un coco-ampho-acétate, un coco-ampho-propionate, un coco-ampho-hydroxypropyl sulfonate, un lauryl-ampho-acétate, un lauryl-ampho-dipropionate, un capryl-ampho-diacétate, un propionate de sodium lauryl-imino, un disodium tall oil iminodipropionate, un stéaryle ampho-propyle sulfonate.

15. Utilisation d'un coussin en mousse produit selon les revendications 1 à 9, pour l'élimination de gaz indésirables existant dans les conduites des installations industrielles et/ou pour le drainage desdites conduites.
